# EUROPÄISCHE PATENTSCHRIFT

(11) **EP 1 371 864 B1**
(45) Veröffentlichungstag und Bekanntmachung des Hinweises auf die Patenterteilung: **06.07.2005**
(21) Anmeldenummer: 03012288.1
(22) Anmeldetag: 11.06.2003
(51) Int. Cl.: F16B 37/04

(54) **Aus federndem Blech bestehendes Klemmstück**
Sheet metal fastener
Dispositif de fixation pour tôles

(30) Priorität: 12.06.2002 DE 10226119
(43) Veröffentlichungstag der Anmeldung: 17.12.2003
(73) Patentinhaber: EJOT GmbH & Co. KG, 57334 Bad Laasphe (DE)
(72) Erfinder: Dieckmann, Volker, 57319 Bad Berleburg (DE)
(74) Vertreter: Bardehle, Heinz, Dipl.-Ing.

(56) Entgegenhaltungen:
- GB-A- 1 217 382
- US-A- 1 881 836
- US-A- 2 376 167
- US-A- 2 426 799

## Beschreibung

Die Erfindung bezieht sich auf ein aus federndem Blech bestehendes Klemmstück mit zwei gegenüberliegenden, V-förmigen Rasteinbuchtungen und einem die Rasteinbuchtungen verbindenden Federboden, der in seiner Mitte ein Loch zur Aufnahme einer Schraube zum Befestigen eines Bauteils an einer Platte aufweist.

Ein ähnliches Klemmstück ist in der DE 197 30 870 A1 veröffentlicht. Das bekannte Klemmstück dient dazu, mit Schlitzen versehene Steinelemente an einem Untergrund zu befestigen. Zu diesem Zweck wird das Klemmstück mittels einer Schraube an dem Untergrund befestigt, wobei die Schraube von der Seite der Rasteinbuchtungen in das Loch in dem die beiden Rasteinbuchtungen verbindenden Federboden eingeführt wird. Daraufhin kann dann das Steinelement gegen das Klemmstück gedrückt werden, wobei dessen Rasteinbuchtungen in die Schlitze im Steinelement eindringen und sich in diesem verklemmen.

Es ist weiterhin aus der US-A-1,881,836 oder der US-A-2,376,167 ein Klemmstück bekannt, das zur Befestigung eines Bauteils an einer Platte dient. Es wird in einen Durchbruch der Platte eingerastet, wozu die Rasteinbuchtungen des Klemmstücks so tief gestaltet sind, dass ihre Schenkel in eingerasteter Lage des Klemmstücks beidseitig den Rand des Durchbruchs umfassen, wobei der Federboden einen Abstand von der Platte einhalt. Wenn in dieses Klemmstück von der Seite des Bauteils her eine Schraube eingedreht wird, mit deren Kopf dann das Bauteil an die Platte herangezogen wird, dann wird dabei auch der Federboden des Klemmstücks zwischen die Rasteinbuchtungen mehr oder minder hineingezogen, womit sich durch das Festziehen der Schraube eine hohe Anpresskraft zwischen Platte und Bauteil ergibt.

Der Erfindung liegt die Aufgabe zugrunde, ein solches Klemmstück so zu gestalten, dass dieses mit den Enden seiner Schenkel bei einem definierten Druck an dem Bauteil anliegt, der dem Klemmstück zusammen mit dem Bauteil innerhalb der Größe des Durchbruchs eine Verschiebemöglichkeit belässt. Erfindungsgemäß geschieht dies dadurch, dass zwischen Federboden und Bauteil ein Stützteil vorgesehen ist, das bei Druck auf den Federboden diesen durch Abstützung des Stützteils am Bauteil in einem Mindestabstand von dem Bauteil hält.

Das aus federndem Blech bestehende Klemmstück erlaubt ein Einsetzen in den Durchbruch der Platte in der Weise, dass die Rasteinbuchtungen zusammengedrückt werden, wodurch der Federboden gekrümmt wird, so dass das Klemmstück mühelos in den Durchbruch eingesetzt werden kann. Nach Freigabe der Schenkel der Rasteinbuchtungen spreizen diese auseinander, womit das Einrasten in den Durchbruch der Platte vollzogen ist. Damit nun der mit seinem Loch eine Schraube aufnehmende Federboden eine definierte Klemmkraft gegenüber der Platte erzeugt, ist zwischen dem Federboden und dem Bauteil ein Stützteil vorgesehen, das einen Mindestabstand des Federbodens vom Bauteil hält. Mit dem Anziehen der Schraube wird das Bauteil an die Platte herangezogen und das Bauteil unter definierter Spannung ständig gegen die Platte gedrückt. Es liegt damit eine stabile Verbindung zwischen Platte und Bauteil vor, die durch das einfach zu handhabende Klemmstück gewährleistet wird. Diese definierte Spannung gewährleistet eine Verschiebemöglichkeit in einem rechteckigen Durchbruch mit einer gegenüber der Breite der Schenkel der Rasteinbuchtungen größeren Länge, die zum Ausgleich von Toleranzen (z.B. bei Erwärmung des Bauteils) ausgenutzt werden kann. Jedoch ist im Falle eines Durchbruchs mit einer Länge, die der Breite der Schenkel der Rasteinbuchtungen entspricht, die Lage des Klemmstücks gegenüber der Platte unverschiebbar festgelegt.

Für die Ausbildung des Stützteils gibt es verschiedene, vorteilhafte Möglichkeiten. So kann der Federboden von seiner Mitte und quer zu seiner Längserstreckung ausgehende, mindestens einen das Stützteil bildende Stützlappen aufweisen. Andererseits ist es möglich, das Stützteil aus der Rasteinbuchtung in Richtung auf den Federboden auszubiegen, wodurch ebenfalls der Abstand des Federbodens in Bezug auf das Bauteil festgehalten wird. Ferner besteht die Möglichkeit, das Stützteil als aus dem Federboden gezogenen rohrartigen Durchzug auszubilden. Eine ähnliche Gestaltung ergibt sich dann, wenn in das Loch des Federbodens ein das Stützteil bildendes Kunststoff-Rohrstück eingespritzt wird. Auch hierzu gibt es eine ähnliche Gestaltung, nämlich dadurch, dass mit dem Loch des Federbodens ein das Stützteil bildendes Blechrohrstück formschlüssig verbunden ist.

Um die Federeigenschaften des Klemmstücks besonders gut ausnutzen zu können, wird der Federboden zweckmäßig gewölbt ausgebildet.

In den Figuren sind Ausführungsbeispiele der Erfindung dargestellt. Es zeigen:
- Figur 1: das Klemmstück, eingerastet in eine Platte mit an dieser befestigtem Bauteil in Seitensicht,
- Figur 2: das gleiche Klemmstück allein in perspektivischer Sicht,
- Figur 3: das Klemmstück allein mit einem aus der Rasteinbuchtung in Richtung auf den Federboden ausgebogenem Stützteil,
- Figur 4: das Klemmstück allein mit aus dem Federboden gezogenem rohrartigen Durchzug,
- Figur 5: eine Gestaltung mit das Stützteil bildendem Kunststoff-Rohrstück,
- Figur 6: das Klemmstück allein mit einem mit dem Loch des Federbodens formschlüssig verbundenen Blechrohrstück.

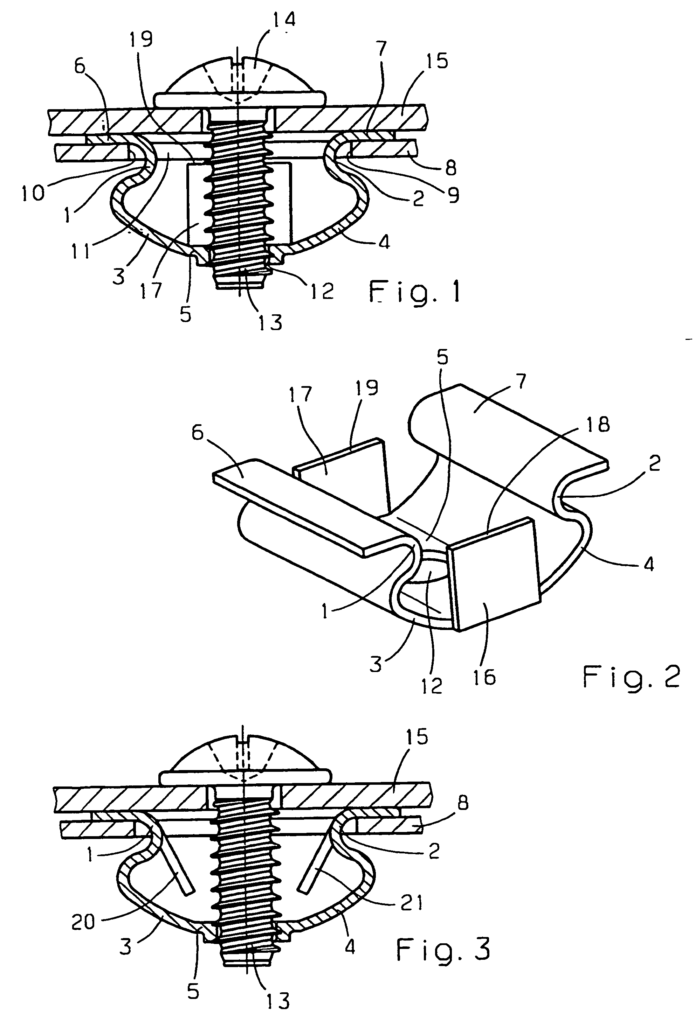

Das in der Figur 1 dargestellte Klemmstück weist die beiden gegenüberliegenden Rasteinbuchtungen 1 und 2 auf, die über ihre Schenkel 3 und 4 in den gewölbten Federboden 5 übergehen. Die beiden Rasteinbuchtungen 1 und 2 sind etwa V-förmig gestaltet, ihre Schenkel greifen mit ihren Enden 6 und 7 hinter die Platte 8, auf deren den Enden 6 und 7 abgewandter Seite sich die Rasteinbuchtungen 1 und 2 so fortsetzen, dass von den Rasteinbuchtungen 1 und 2 die Ränder 9 und 10 des Durchbruchs 11 von den Rasteinbuchtungen 1 und 2 umfasst werden, die hierzu entsprechend tief gestaltet sind. Das Klemmstück besteht aus federndem Blech, z.B. Federstahlblech, so dass für das Einführen des Federbodens 5 und der Schenkel 3 und 4 in den Durchbruch 11 der Platte 8 die Rasteinbuchtungen 1 und 2 entsprechend weit zusammengebogen werden können. Der Federboden 5 des Klemmstücks ist mit einem Loch 12 zur Aufnahme der Schraube 13 versehen, die in ein entsprechendes Gewinde in dem Loch 12 passt. Der Kopf 14 der Schraube 13 sitzt hinter dem Bauteil 15, das mittels des Klemmstücks an der Platte 8 zu befestigen ist. In der dargestellten Lage des Klemmstücks ist dieses in Bezug auf die eingedrehte Schraube 13 noch entspannt. Bei weiterem Eindrehen der Schraube 13 zieht diese den Federboden 12 in Richtung auf die Platte 8, womit das gesamte dargestellte Befestigungssystem unter Spannung gehalten wird.

Beim weiteren Anziehen der Schraube 13 wird, wie gesagt, der Federboden 5 an die Platte 8 herangezogen, wobei sich die von der Mitte des Federbodens 5 ausgehenden Stützlappen 16 (Stützlappen 17 siehe Figur 2) mit ihren Stosskanten 18 (Stosskante 19 siehe Figur 2) an das Bauteil 15 annähern und schließlich sich gegen dieses abstützen, wobei sie durch den Durchbruch 11 in der Platte 8 hindurchragen. Mit dem Abstützen der Stosskanten 18 und 19 an dem Bauteil 15 ergibt sich die Funktion eines Stützteils, mit dem der Abstand zwischen Federboden 5 und Bauteil 15 auf die Länge der Stützlappen 16 und 17 eingestellt ist und der entsprechende Abstand bei definierter Spannung der Rasteinbuchtungen 1 und 2 damit eingehalten wird.

Aus der Figur 2, die das Klemmstück gemäß Figur 1 in perspektivischer Sicht wiedergibt, ist die Gesamtgestaltung des Klemmstücks deutlich ersichtlich. Anhand der Figur 2 erkennt man, dass das Klemmstück mit den beiden als Stützteil wirkenden Stützlappen 16 und 17 versehen ist, die von der Mitte des Federbodens 5 aus dem Material des Klemmstücks herausragen, so dass das in den Figuren 1 und 2 dargestellte Klemmstück ein einstückiges Bauelement bildet.

In der Figur 3 ist eine Variante der Gestaltung des Stützteils an dem Klemmstück dargestellt, bei der es sich darum handelt, dass das Stützteil aus der Rasteinbuchtung 1 bzw. 2 und dem zugehörigen Schenkel 3 bzw. 4 ausgebogen ist. Die beiden Stützteile 20 und 21 sind so lang, dass sie bei angezogener Schraube 13 gegen den Federboden 5 stoßen und damit den Abstand zwischen Bauteil 15 und Federboden 5 entsprechend einstellen. Damit man für die Stützteile 20 und 21 eine ausreichende Länge erhält, sind diese mittig aus den Rasteinbuchtungen 1 und 2 und den Schenkeln 3 und 4 über eine entsprechende Länge freigeschnitten und herausgebogen.

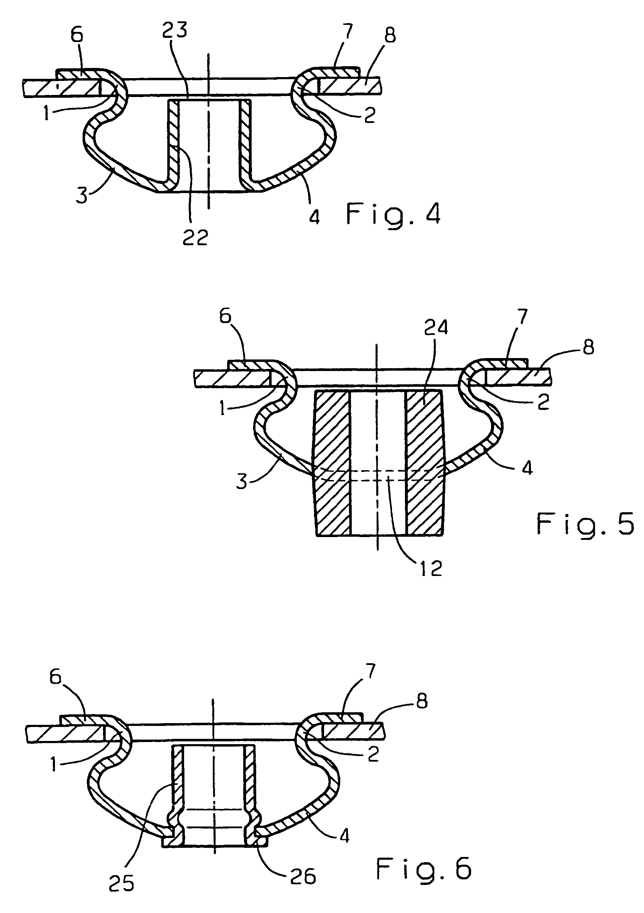

Bei dem in der Figur 4 dargestellten Klemmstück handelt es sich um eine besondere Gestaltung des Stützteils, das hier als aus dem ebenen Federboden 5 gezogener, rohrartiger Durchzug 22 gebildet ist. Das in der Figur 4 dargestellte Klemmstück ist in seiner entspannten Lage gezeichnet, in der es also durch eine Schraube noch nicht an ein Bauteil herangezogen ist. Wenn jedoch mittels einer Schraube, wie im Zusammenhang mit der Figur 1 dargestellt, der Federboden 5 angezogen wird, dann tritt die Stirnkante 23 des Durchzuges 22 durch den aus Figur 1 ersichtlichen Durchbruch 11 hindurch und stützt sich schließlich an dem in Figur 4 nicht dargestellten Bauteil ab (in der Figur 1 Bauteil 15).

Figur 5 zeigt eine Variante zu der Darstellung gemäß Figur 4. Dabei handelt es sich um ein das Stützteil bildendes Kunststoff-Rohrstück 24, das in das Loch 12 des ebenen Federbodens 5 eingespritzt ist. Das Kunststoff-Rohrstück 24 übernimmt bei Anziehen einer nicht dargestellten Schraube die gleiche Funktion wie der rohrartige Durchzug 22 gemäß Figur 4.

In Figur 6 ist eine weitere Variante der Ausbildung des Stützteils dargestellt. Hier wird das Stützteil durch das Blechrohrstück 25 gebildet, das mit dem Loch 12 im ebenen Federboden 5 formschlüssig verbunden ist, und zwar, wie in Figur 5 und 6 dargestellt, durch Umbördeln des Randes 26 des Blechrohrstücks 25, womit aus zwei Teilen ein fest zusammengefügtes Bauelement entsteht.

Es sei noch darauf hingewiesen, dass in den dargestellten Ausführungsbeispielen gemäß Figuren 1 bis 3 der Federboden gewölbt ausgebildet ist. Diese Gestaltung erleichtert das Zusammenbiegen des Klemmstücks beim Einführen in den Durchbruch einer Platte, wie oben beschrieben.

## Patentansprüche

1. Aus federndem Blech bestehendes Klemmstück mit zwei gegenüberliegenden, V-förmigen Rasteinbuchtungen (1, 2) und einem die Rasteinbuchtungen (1, 2) verbindenden Federboden (5), der in seiner Mitte ein Loch (12) zur Aufnahme einer Schraube (13) zum Befestigen eines Bauteils (15) an einer Platte (8) aufweist, wobei zum Einrasten in einen Durchbruch (11) der Platte (8) die Rasteinbuchtungen (1, 2) so tief gestaltet sind, dass ihre Schenkel (3, 4) in eingerasteter Lage des Klemmstücks beidseitig den Rand (9, 10) des Durchbruchs (11) derart umfassen, dass der Federboden (5) einen Abstand von der Platte (8) einhält, **dadurch gekennzeichnet, dass** zwischen Federboden (5) und Bauteil (15) ein Stützteil (16, 17; 20, 21) vorgesehen ist, das bei Druck auf den Federboden (5) diesen durch Abstützung des Stützteils (16, 17; 20, 21) am Bauteil (15) in einem Mindestabstand von dem Bauteil (15) hält.

2. Klemmstück nach Anspruch 1, **dadurch gekennzeichnet, dass** der Federboden (5) von seiner Mitte und quer zu seiner Längserstreckung ausgehende, mindestens einen das Stützteil bildende Stützlappen (16, 17) aufweist.

3. Klemmstück nach Anspruch 2, **dadurch gekennzeichnet, dass** das Stützteil (20, 21) aus der Rasteinbuchtung (1, 2) und dem zugehörigen Schenkel (3, 4) in Richtung auf den Federboden (5) ausgebogen ist.

4. Klemmstück nach Anspruch 1, **dadurch gekennzeichnet, dass** das Stützteil als aus dem Federboden (5) gezogener, rohrartiger Durchzug (22) ausgebildet ist.

5. Klemmstück nach Anspruch 1, **dadurch gekennzeichnet, dass** in das Loch (12) des Federbodens (5) ein das Stützteil bildendes Kunststoff-Rohrstück (24) eingespritzt ist.

6. Klemmstück nach Anspruch 1, **dadurch gekennzeichnet, dass** mit dem Loch (12) des Federbodens (5) ein das Stützteil bildendes Blechrohrstück (25) formschlüssig verbunden ist.

7. Klemmstück nach einem der vorhergehenden Ansprüche, **dadurch gekennzeichnet, dass** der Federboden gewölbt ausgebildet ist.

## Claims

1. Clamping piece consisting of resilient sheet metal, comprising two opposing V-shaped locking indents (1, 2) and a spring base (5) connecting the locking indents (1, 2) and provided in its centre with a hole (12) for receiving a screw (13) for fastening a component (15) to a panel (8), wherein, for locking into an opening (11) in the panel (8), the locking indents (1, 2) have such a depth that, when the clamping piece is in the locked position, their arms (3, 4) embrace the edges (9. 10) of the opening (11) on either side in such a manner that the spring base (5) maintains a distance from the panel (8), **characterised in that** a supporting part (16, 17; 20, 21) is provided between the spring base (5) and the component (15) and, when pressure is applied to the spring base (5), keeps the latter at a minimum distance from the component (15) as a result of the fact that the supporting part (16, 17; 20, 21) is supported against the component (15).

2. Clamping piece according to claim 1, **characterised in that** the spring base (5) has at least one supporting lug (16, 17) forming the supporting part, departing from its centre and extending transversely to its longitudinal extent.

3. Clamping piece according to claim 2. **characterised in that** the supporting part (20, 21) is bent out of the locking indent (1, 2) and the associated arm (3, 4) in the direction of the spring base (5).

4. Clamping piece according to claim 1, **characterised in that** the supporting part is designed as a tubular rail (22) drawn out of the spring base (5).

5. Clamping piece according to claim 1, **characterised in that** a plastic tubular piece (24) forming the supporting part is injected into the hole (12) in the spring base (5).

6. Clamping piece according to claim 1, **characterised in that** a sheet metal tubular piece (25) forming the supporting part is positively connected to the hole (12) in the spring base (5).

7. Clamping piece according to one of the preceding claims, **characterised in that** the spring base is curved.

## Revendications

1. Pièce de serrage en tôle élastique avec deux renfoncements d'encliquetage opposés en forme de V (1, 2) et avec un fond élastique (5) qui relie les renfoncements d'encliquetage (1, 2) et qui, en son milieu, comporte un trou (12) pour recevoir une vis (13) pour la fixation d'un élément de construction (15) à une plaque (8), les renfoncements d'encliquetage (1, 2) étant conformés, en vue de l'encliquetage dans un passage (11) de la plaque (8), avec une profondeur telle que, dans la position encliquetée de la pièce de serrage, leurs branches (3, 4) entourent le bord (9, 10) du passage (11) des deux côtés, de façon que le fond élastique (5) se trouve à distance de la plaque (8), **caractérisée en ce qu'**entre le fond élastique (5) et l'élément de construction (15) est prévue une pièce d'appui (16, 17 ; 20, 21) qui, en cas de pression sur le fond élastique (5), maintient celui-ci à une distance minimale de l'élément de construction (15) par le fait que la pièce d'appui (16, 17 ; 20, 21) prend appui sur l'élément de construction (15).

2. Pièce de serrage selon la revendication 1, **caractérisée en ce que** le fond élastique (5) comporte des pattes d'appui (16, 17) qui s'étendent à partir de son milieu et transversalement à sa dimension longitudinale et qui forment au moins la pièce d'appui.

3. Pièce de serrage selon la revendication 2, **caractérisée en ce que** la pièce d'appui (20, 21) est obtenue par pliage en direction du fond élastique (5) à partir du renfoncement d'encliquetage (1, 2) et de la branche associée (3, 4).

4. Pièce de serrage selon la revendication 1, **caractérisée en ce que** la pièce d'appui est conformée en soyage tubulaire (22) réalisé à partir du fond élastique (5).

5. Pièce de serrage selon la revendication 1, **caractérisée en ce qu'**une pièce tubulaire en matière plastique (24) formant la pièce d'appui est insérée par injection dans le trou (12) du fond élastique (5).

6. Pièce de serrage selon la revendication 1, **caractérisée en ce qu'**une pièce tubulaire en tôle (25) formant la pièce d'appui est reliée par complémentarité de formes au trou (12) du fond élastique (5).

7. Pièce de serrage selon une des revendications précédentes, **caractérisée en ce que** le fond élastique présente une conformation bombée.
